# EUROPÄISCHE PATENTSCHRIFT

(11) **EP 1 262 619 B1**
(45) Veröffentlichungstag und Bekanntmachung des Hinweises auf die Patenterteilung: **04.08.2010**
(21) Anmeldenummer: 02010395.8
(22) Anmeldetag: 08.05.2002
(51) Int. Cl.: E05C 9/20

(54) **Beschlaganordnung an Fenstern, Türen oder dergleichen mit einer Verbindungsvorrichtung zum Verbinden von Beschlagteilen**
Fitting assembly for windows, doors or similar with a connecting device for connecting fitting components
Ensemble de ferrure pour fênetres, portes ou similaires avec un dispositif de connexion pour la connexion des éléments de ferrure

(30) Priorität: 02.06.2001 DE 10127148
(43) Veröffentlichungstag der Anmeldung: 04.12.2002
(73) Patentinhaber: ROTO FRANK AG, 70771 Leinfelden-Echterdingen (DE)
(72) Erfinder: Zaccaria, Giovanni, 70771 Leinfelden-Echterdingen (DE)

(56) Entgegenhaltungen:
- AT-B- 327 057
- DE-A- 2 200 709
- FR-A- 2 600 127
- GB-A- 628 316
- GB-A- 1 233 628
- GB-A- 2 086 976
- US-A- 3 680 620
- US-A- 5 106 251

## Beschreibung

Die Erfindung betrifft eine Beschlaganordnung an Fenstern, Türen oder dergleichen, mit wenigstens zwei Beschlagteilen sowie mit einer Verbindungsvorrichtung zum Verbinden der Beschlagteile.

Eine Beschlaganordnung mit einer als Verbindungsschraube ausgebildeten Vorrichtung zum Verbindung von Beschlagteilen ist beispielsweise offenbart in AT 327 057. Die Verbindungsschraube dient dabei zur Kopplung zweier Abschnitte eines Verstellgestänges an einem Fenster- oder Türflügel. Zur Überführung in die Verbindungsstellung ist die vorbekannte Verbindungsschraube so weit in eine Gewindebohrung an einem der beiden Gestängeabschnitte einzudrehen, bis sie mit ihrem vorauseilenden Ende in eine Vertiefung an dem zweiten Gestängeabschnitt eingreift.

Aus US 3,680,620 A ist eine Schraubverbindung bekannt, die eine zweiteilige Mutter umfasst, deren Mutterteile mit gegenseitigem Spiel an einem flexiblen Mutterhalter angebracht sind. Zur Montage in einer Beschlagteilnut werden die Mutterteile gegen die Wirkung einer von dem Mutterhalter ausgeübten Rückstellkraft zusammengedrückt und im zusammengedrückten Zustand gemeinschaftlich mit dem Mutterhalter in eine Beschlagteilnut an einem Fenster oder einer Tür eingesetzt. Die Mutterteile werden danach freigegeben und kommen unter der Wirkung der von dem Mutterhalter ausgeübten Rückstellkraft mit ihren Außenseiten an den Seitenwänden der Beschlagteilnut zur Anlage. In das an den Mutterteilen ausgebildete Innengewinde wird schließlich eine Befestigungsschraube eingedreht. Alternativ wird in die Mutterteile eine Schraube eingedreht, welche die Mutterteile beim Eindrehen gegen die Nutseitenwände presst. Dadurch werden die Mutterteile in der Beschlagteilnut verspannt.

GB 2 086 976 A betrifft ein Schloss zur Verriegelung eines bewegten Elementes an einem feststehenden Element, insbesondere eines Fenster- oder eines Türflügels an einem zugehörigen festen Rahmen. Zu diesem Zweck dient ein Riegelbolzen, der mittels eines Halters an dem bewegten Element gelagert und in Bolzenlängsrichtung bewegbar geführt ist. Über eine Teillänge ist der Riegelbolzen mit einem Außengewinde versehen. Eine an dem Halter des Riegelbolzens angebrachte Feder steht mit Federarmen in radialer Richtung des Riegelbolzens zu diesem hin vor. Zur Verriegelung des betreffenden beweglichen Elementes wird der Riegelbolzen in axialer Richtung durch den Halter hindurch in eine Verriegelungsposition bewegt, in welcher das freie Bolzenende in das als Widerlager für das bewegliche Element vorgesehene feststehende Element eingreift. Bei dieser Bewegung des Riegelbolzens gleiten die Federarme der an dem Halter des Riegelbolzens befestigten Feder über das Außengewinde des Riegelbolzens hinweg. Hat der Riegelbolzen seine Verriegelungsposition erreicht, so rasten die Federarme in den Gewindegang des Außengewindes an dem Riegelbolzen ein. Dadurch wird der Riegelbolzen gegen eine Rückzugsbewegung gesichert. Zum Aufheben der Verriegelung ist der Riegelbolzen um seine Längsachse zu drehen. Dabei wirken die in das Außengewinde des Riegelbolzens eingreifenden Federarme mit dem Außengewinde des Riegelbolzens nach Art einer Mutter zusammen.

Gemäß US 5,106,251 A dient zum Verbinden zweier Beschlagteile einer Beschlaganordnung eine Verbindungsvorrichtung, die einen Verbindungsbolzen, wenigstens ein Rastelement, wenigstens eine in radialer Richtung des Verbindungsbolzens offene Rastaufnahme sowie wenigstens eine in axialer Richtung des Verbindungsbolzens wendelartig ansteigende Führungsnut umfasst. An der achsparallelen Außenwand des vorbekannten Verbindungsbolzens sind die in radialer Richtung des Verbindungsbolzens offene Rastaufnahme sowie die von einem Außengewinde des Verbindungsbolzens gebildete Führungsnut vorgesehen. An einem der miteinander zu verbindenden Beschlagteile steht das Innengewinde einer geteilten Mutter als Rastelement in radialer Richtung des Verbindungsbolzens vor. In einer Verbindungsstellung ist der Verbindungsbolzen an den miteinander zu verbindenden Beschlagteilen abgestützt. Dabei ist das Rastelement in die zugeordnete Rastaufnahme eingerastet. Bei Drehung des in der Verbindungsstellung befindlichen Verbindungsbolzens in einer Öffnungsdrehrichtung um eine Verbindungsbolzenachse ist das als Rastelement dienende Innengewinde der geteilten Mutter in der zugeordneten Führungsnut, d.h. in dem Außengewinde des Verbindungsbolzens, in Nutlängsrichtung bewegbar geführt. Durch die Relativbewegung von Führungsnut und zugeordnetem Rastelement ist der Verbindungsbolzen aus der Verbindungsstellung in axialer Richtung in eine Lösestellung bewegbar.

Den Stand der Technik in montagetechnischer Hinsicht zu vereinfachen hat sich die vorliegende Erfindung zum Ziel gesetzt.

Erfindungsgemäß gelöst wird diese Aufgabe durch die Beschlaganordnung nach Patentanspruch 1. Zur Herstellung der gewünschten Verbindung zwischen den Beschlagteilen bedarf es lediglich einer geradlinigen axialen Bewegung des Verbindungsbolzens. Die Arretierung des Verbindungsbolzens in der Verbindungsstellung erfolgt selbsttätig, nämlich durch Einrasten des oder der Rastelemente in der oder den zugeordneten Rastaufnahmen. Auch das Lösen der so hergestellten Verbindung gestaltet sich äußerst einfach. Zu diesem Zweck ist lediglich der Verbindungsbolzen um seine Drehachse in Öffnungsdrehrichtung zu drehen. Nach Art einer Schraube wird der Verbindungsbolzen dadurch axial aus der Verbindungs- in eine Lösestellung bewegt. In einer Lösestellung kann der Verbindungsbolzen vorläufig an einem der miteinander zu verbindenden Beschlagteile fixiert werden. Dadurch wird beispielsweise die Möglichkeit eröffnet, das betreffende Beschlagteil mit daran vormontiertem Verbindungsbolzen an den Einbauort anzuliefern, ohne einen Verlust des Verbindungsbolzens beim Transport befürchten zu müssen. Auch vereinfacht sich die Handhabung der betreffenden Beschlagteile und des Verbindungsbolzens bei der Montage. So nimmt der vorläufig fixierte Verbindungsbolzen bereits eine Position ein, in welcher er zur Überführung in seine Verbindungsstellung lediglich noch in axialer Richtung zu beaufschlagen und dadurch zu verschieben ist. Aufgrund der einfachen Kinematik der beschriebenen Bewegungsabläufe ist die erfindungsgemäße Beschlaganordnung insbesondere im Rahmen automatisierter Montageverfahren verwendbar.

Besondere Ausführungsarten der Erfindung gemäß Patentanspruch 1 sind in den abhängigen Patentansprüchen 2 bis 13 beschrieben.

Gemäß Patentanspruch 2 wird wenigstens ein Rastelement gleichzeitig zur Arretierung des Verbindungsbolzens in der Verbindungsstellung und zur Überführung des Verbindungsbolzens aus der Verbindungs- in eine Lösestellung genutzt.

Fertigungstechnisch besonders vorteilhafte, weil einfache Erfindungsvarianten sind den Patentansprüchen 3 und 4 zu entnehmen.

Die kennzeichnenden Merkmale der Patentansprüche 5 und 6 sorgen dafür, dass der in einer Lösestellung vorläufig fixierte Verbindungsbolzen mit geringem Kraftaufwand in die Verbindungsstellung überführt werden kann (Patentanspruch 5) bzw. dass der die Verbindungsstellung einnehmende Verbindungsbolzen nur mittels einer verhältnismäßig großen Kraft axial in eine Lösestellung zu bewegen ist (Patentanspruch 6).

Die erfindungsgemäße Beschlaganordnung nach Patentanspruch 7 zeichnet sich dadurch aus, dass der Verbindungsbolzen zum Lösen der Verbindung lediglich über einen Drehwinkel von 180° in Öffnungsdrehrichtung bewegt werden muss.

Das kennzeichnende Merkmal von Patentanspruch 8 bedingt vorteilhafterweise eine symmetrische Lagerung des in der Verbindungsstellung bzw. des in einer Lösestellung an einem der Beschlagteile arretierten Verbindungsbolzens. Eine konstruktiv einfache Möglichkeit zur Umsetzung der symmetrischen Lagerung des Verbindungsbolzens ist in Patentanspruch 9 beschrieben.

Die Erfindungsbauart nach Patentanspruch 10 ist durch das anspruchsgemäße Axialsicherungselement gegen Fehlbetätigung geschützt. So bedarf es zum Abscheren des Axialsicherungselementes einer derart großen Kraft, dass ein versehentliches Überführen des Verbindungsbolzens in die Verbindungsstellung weitestgehend ausgeschlossen ist.

Die in Patentanspruch 11 genannte lösbare Drehsicherung bedingt einen wirksamen Schutz des Verbindungsbolzens gegen unbeabsichtigte Überführung aus der Funktions- in eine Lösestellung. Eine aus konstruktiven und fertigungstechnischen Gründen vorteilhafte Möglichkeit zur Gestaltung der lösbaren Drehsicherung des Verbindungsbolzens ergibt sich aus Patentanspruch 12.

Die Erfindungsbauart nach Patentanspruch 13 zeichnet sich durch eine spielfreie Abstützung des in Verbindungsstellung befindlichen Verbindungsbolzens an dem den Bolzenkopf sowie den Bolzenschaft aufnehmenden Beschlagteil aus. Nachdem dieses Beschlagteil über den Verbindungsbolzen mit dem zweiten Beschlagteil verbunden ist, bewirkt der spielfreie Sitz des seine Funktionsstellung einnehmenden Verbindungsbolzens zweckmäßigerweise auch eine Minimierung des Spiels zwischen den beiden miteinander verbundenen Beschlagteilen.

Nachstehend wird die Erfindung anhand schematischer Darstellungen zu einem Ausführungsbeispiel näher erläutert. Es zeigen:
- Fig 1.: einen Verbindungsbolzen in der Seitenansicht,
- Fig. 2: den Verbindungsbolzen nach Fig. 1 in der Ansicht in Richtung des Pfeils II in Fig. 1,
- Fig. 3: den Verbindungsbolzen nach den Fign. 1 und 2 in perspektivischer Darstellung,
- Fig. 4: zwei Verbindungsbolzen nach den Fign. 1 bis 3 in einer Lösestellung an einem Beschlagteil in Form eines Schließers (Teilschnitt),
- Fig. 5: einen Längsschnitt der Baueinheit nach Fig. 4,
- Fig. 6: die Baueinheit nach den Fign. 4 und 5 in der Ansicht in Richtung des Pfeils VI in Fig. 5,
- Fig. 7: zwei Verbindungsbolzen nach den Fign. 1 bis 3 in der Verbindungsstellung an dem Schließer nach den Fign. 4 bis 6 sowie an zwei Treibstangenabschnitten (Teilschnitt),
- Fig. 8: die Baueinheit nach Fig. 7 in der Ansicht in Richtung des Pfeils VIII in Fig. 7 und
- Fig. 9: die Baueinheit nach den Fign. 7 und 8 in der Ansicht in Richtung des Pfeils IX in Fig. 8 sowie in Montagelage an einem Flügelprofil eines Fensters.

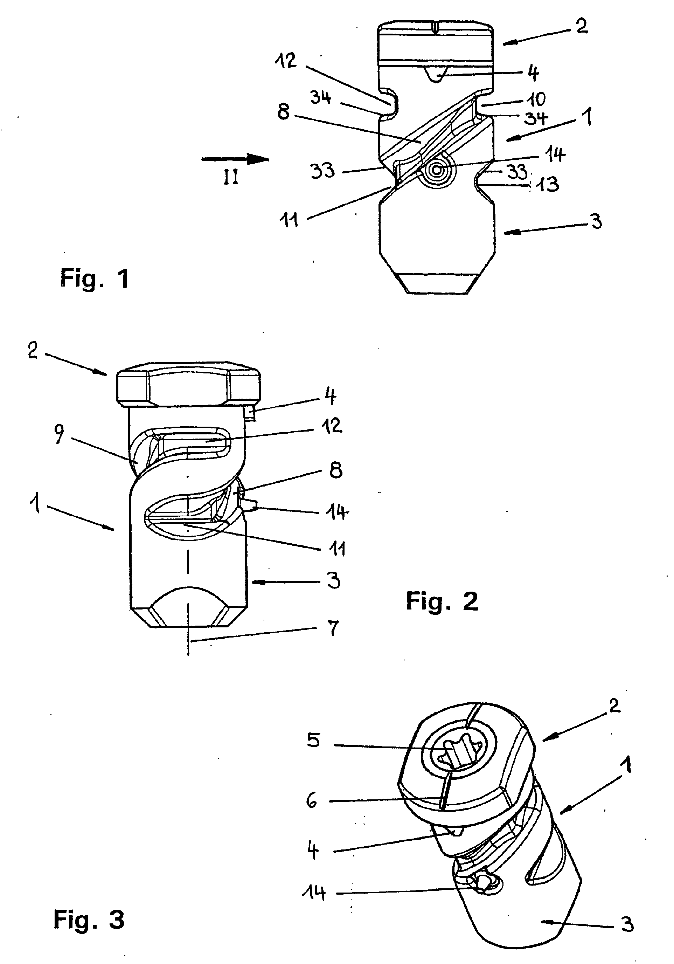

Ausweislich der Figuren 1 bis 3 besitzt ein Verbindungsbolzen 1 einen Bolzenkopf 2 sowie einen Bolzenschaft 3.

An die Unterseite des Bolzenkopfs 2 ist ein Steuernocken 4 angeformt. An seiner Oberseite weist der Bolzenkopf 2 einen Eingriff 5 für einen herkömmlichen Steckschlüssel sowie eine Orientierungskerbe 6 auf. Wie Fig. 2 entnommen werden kann, ist der Überstand des Bolzenkopfs 2 gegenüber dem Bolzenschaft 3 an der in der Abbildung rechten Seite des Bolzenschafts 3 größer als an der gegenüberliegenden Seite. Infolgedessen ergibt sich eine Asymmetrie des Bolzenkopfs 2 gegenüber einer Achse 7 des Bolzenschafts 3.

Der Bolzenschaft 3 ist an seiner achsparallelen Mantelfläche mit zwei Führungsnuten 8, 9 versehen, die in Richtung der Achse 7 des Bolzenschafts 3 wendelartig ansteigen und die sich in Umfangsrichtung des Bolzenschafts 3 jeweils über einen Umfangswinkel von etwa 180° erstrecken. An ihren einander entgegengesetzten Längsenden mündet die Führungsnut 8 in eine obere Rastaufnahme 10 sowie in eine untere Rastaufnahme 11. Entsprechend endet die Führungsnut 9 in einer oberen Rastaufnahme 12 sowie in einer unteren Rastaufnahme 13. Die oberen Rastaufnahmen 10, 12 sowie die unteren Rastaufnahmen 11, 13 bilden horizontale Verlängerungen der in Richtung der Achse 7 des Bolzenschaftes 3 ansteigenden Führungsnuten 8, 9. Außerdem sind die unteren Rastaufnahmen 11, 13 an ihrer den oberen Rastaufnahmen 10, 12 zugewandten Seiten durch eine in axialer Richtung des Verbindungsbolzens 1 geneigte Schräge 33 begrenzt. Davon abweichend weisen die oberen Rastaufnahmen 10, 12 in radialer Richtung des Verbindungsbolzens 1 verlaufende Begrenzungen 34 auf. Ein Axialsicherungselement in Form eines Scherzapfens 14 steht an dem Bolzenschaft 3 in radialer Richtung vor.

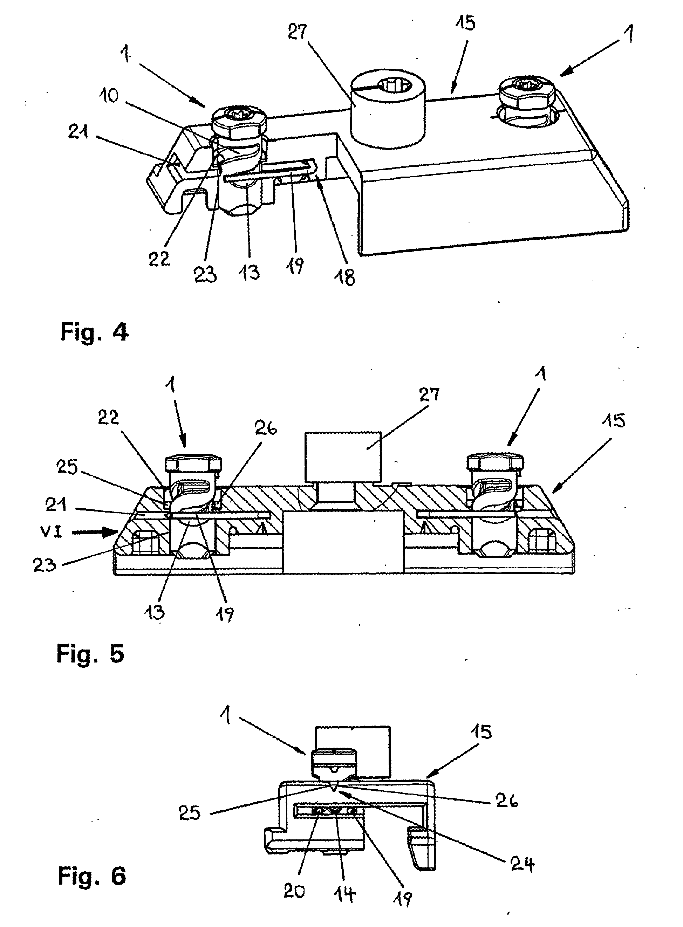

Gemäß den Fign. 4 bis 9 dienen zwei Verbindungsbolzen 1 der vorstehenden Art zur Verbindung eines als Schließer 15 ausgebildeten Beschlagteils mit zwei weiteren Beschlagteilen in Form von Treibstangenabschnitten 16, 17. Nachdem beide Beschlagteilverbindungen identisch ausgeführt sind, können sich die nachfolgenden Ausführungen auf eine detaillierte Beschreibung einer dieser Beschlagteilverbindungen beschränken.

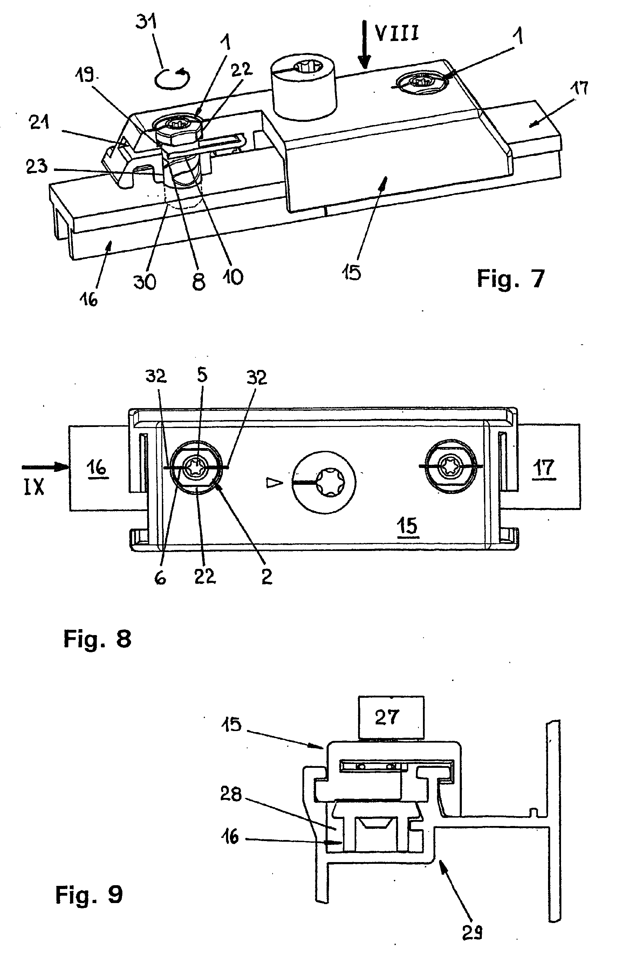

Beispielsweise den Fign. 4 bis 6 kann entnommen werden, dass dem in Fig. 4 linken Verbindungsbolzen 1 eine im Wesentlichen U-förmige Schenkelfeder 18 zugeordnet ist, deren einander gegenüberliegende Schenkel Rastelemente 19, 20 ausbilden. Untergebracht ist die Schenkelfeder 18 in einer Schlitzöffnung 21 des Schließers 15. Die Höhe der Schlitzöffnung 21 ist dabei so bemessen, dass die Schenkel 19, 20 der Schenkelfeder 18 in horizontaler Richtung beweglich sind. An der in Figur 4 linken Seite des Schließers 15 ebenfalls vorgesehen sind eine langlochartige Aussparung 22 sowie ein gegenüber dieser durchmesserreduzierter Durchtrittskanal 23. Die Erstreckung der langlochartigen Aussparung 22 in Längsrichtung des Schließers 15 ist dabei kürzer als die Erstreckung der langlochartigen Aussparung 22 in Querrichtung des Schließers 15. Der Unterschied der genannten Abmessungen der langlochartigen Aussparung 22 bewegt sich dabei im Zehntelmillimeterbereich und ist daher etwa in Fig. 8 nur andeutungsweise erkennbar. In den Boden der langlochartigen Aussparung 22 sind zwei einander in Längsrichtung des Schließers 15 gegenüberliegende Einsenkungen 24 eingearbeitet, die einen keilförmigen Querschnitt besitzen und jeweils von Führungsflächen 25, 26 begrenzt werden. Ein einstellbarer Schließzapfen 27 ist mittels einer herkömmlichen Nietverbindung an der Oberseite des Schließers 15 angebracht.

An den Montageort wird die Baueinheit aus den Verbindungsbolzen 1, den Schenkelfedern 18 sowie dem Schließer 15 in dem in den Fign. 4 bis 6 gezeigten Zustand angeliefert. Die Verbindungsbolzen 1 sind dabei in axialer Richtung so weit in das Beschlagteil 15 eingesteckt, dass die Schenkel 19, 20 der Schenkelfedern 18 in die unteren Rastaufnahmen 11, 13 an den Verbindungsbolzen 1 rastend eingreifen können. Gleichzeitig sind die Scherzapfen 14 an den Verbindungsbolzen 1 in die Schlitzöffnungen 21 an dem Schließer 15 eingerastet. Die Verbindungsbolzen 1 sind dadurch wirksam gegen unerwünschte Bewegung in axialer Richtung bzw. gegen Verlust gesichert.

Zur Beschlagteilmontage werden zunächst die Treibstangenabschnitte 16, 17 in eine in Fig. 9 gezeigte Beschlagteilnut 28 an einem Flügelprofil 29 eines Metallfensters eingelegt. Anschließend wird die Baueinheit aus Schließer 15, daran vormontierten Verbindungsbolzen 1 und Schenkelfedern 18 durch Bewegung senkrecht zum Grund der Beschlagteilnut 28 und anschlieβende, zum Nutgrund parallele Querverschiebung in die in Fig. 9 ersichtliche Hintergriffsstellung an dem Flügelprofil 29 überführt. Die vormontierten Verbindungsbolzen 1 sind gegenüber dem Schließer 15 derart ausgerichtet, dass die Orientierungskerben 6 an den Bolzenköpfen 2 der Verbindungsbolzen 1 in Längsrichtung des Schließers 15 und somit auch in Längsrichtung der anzukoppelnden Treibstangenabschnitte 16, 17 verlaufen. Für die beschriebene Ausrichtung der Verbindungsbolzen 1 sorgt der Umstand, dass sowohl die unteren Rastaufnahmen 11, 13 an den Bolzenschäften 3 als auch die in die unteren Rastaufnahmen 11, 13 eingreifenden Schenkel 19, 20 der Schenkelfedern 18 in Längsrichtung des Schließers 15 und damit parallel zu den Orientierungskerben 6 an den Bolzenköpfen 2 verlaufen. Kontrollieren lässt sich die korrekte Drehstellung der Verbindungsbolzen 1 anhand der Orientierungskerben 6 an den Bolzenköpfen 2 sowie anhand zugeordneter Markierungen 32 an der Oberseite des Schließers 15.

Bei ordnungsgemäßer Orientierung der Verbindungsbolzen 1 liegen die Steuernocken 4 an der Unterseite der Bolzenköpfe 2 jeweils einer Einsenkung 24 am Boden der langlochartigen Aussparungen 22 gegenüber. Gleichzeitig erstrecken sich die längeren Überstände der Bolzenköpfe 2 gegenüber den Bolzenschäften 3 in Längsrichtung des Schließers 15 und damit in Richtung der kürzeren Erstreckung der langlochartigen Aussparungen 22.

Sind nun die Treibstangenabschnitte 16, 17 in der Beschlagteilnut 28 des Flügelprofils 29 und der seine Hintergriffsstellung einnehmende Schließer 15 mit den daran vorfixierten Verbindungsbolzen 1 derart zueinander positioniert, dass die nach unten weisenden Enden der Verbindungsbolzen 1 Aufnahmeöffnungen 30 an den Treibstangenabschnitten 16, 17, gegenüberliegen, so sind zur Beschlagmontage lediglich noch die Verbindungsbolzen 1 in axialer Richtung in den Schließer 15 einzutreiben. Dies geschieht durch entsprechendes Einschlagen der Verbindungsbolzen 1 unter Abscheren der Scherzapfen 14. Nachdem die Schenkel 19, 20 der Schenkelfedern 18 bei der Axialbewegung der Verbindungsbolzen 1 an den Schrägen 33 der Rastaufnahmen 11, 13 entlanggleiten können, setzen sie der Bewegung der Verbindungsbolzen 1 in die Verbindungsstellung nur einen verhältnismäßig geringen Widerstand entgegen.

Mit den Bolzenköpfen 2 tauchen die Verbindungsbolzen 1 in die langlochartigen Aussparungen 22 an dem Schließer 15 ein, bis sie mit der Unterseite der Bolzenköpfe 2 auf dem Boden der langlochartigen Aussparungen 22 zu liegen kommen. Die Steuernocken 4 an den Unterseiten der Bolzenköpfe 2 dringen dabei in die Einsenkungen 24 an dem Schließer 15 ein. Die Verbindungsbolzen 1 befinden sich nun in ihrer Verbindungsstellung (Fign. 7 bis 9). Die Schenkel 19, 20 der Schenkelfedern 18 sind in die Rastaufnahmen 10, 12 eingerastet. Über die radial verlaufenden Begrenzungen 34 der Rastaufnahmen 10, 12 sind die Verbindungsbolzen 1 an den Schenkeln 19, 20 der Schenkelfedern 18 gegen axiale Bewegung aus der Verbindungs- in eine Lösestellung abgestützt. Auch die Rastaufnahmen 10, 12 an den Verbindungsbolzen 1 erstrecken sich in Längsrichtung des Schließers 15.

Aufgrund der vorstehend beschriebenen Dimensionierung der Bolzenköpfe 2 sowie der langlochartigen Aussparungen 22 und aufgrund der Drehstellung der Bolzenköpfe 2 in den langlochartigen Aussparungen 22 sind die Verbindungsbolzen 1 in ihrer Verbindungsstellung zwischen der Wand der Bolzendurchtrittskanäle 23 und der Wand der langlochartigen Aussparungen 22 in Längsrichtung des Schließers 15 sowie der Treibstangenabschnitte 16, 17 verspannt. Dadurch ergibt sich eine spielfreie Lagerung der Verbindungsbolzen 1 an dem Schließer 15 und somit eine Minimierung des Spiels zwischen dem Schließer 15 und den Treibstangenabschnitten 16, 17. Gegen Verlassen der Hintergriffsstellung an dem Flügelprofil 29 ist der Schließer 15 - wie aus Fig. 9 zu ersehen - über die Treibstangenabschnitte 16, 17 parallel zu dem Grund der Beschlagteilnut 28 in dieser abgestützt.

Sollen die Verbindungen zwischen dem Schließer 15 und den Treibstangenabschnitten 16, 17 gelöst werden, so sind die ihre Verbindungsstellung einnehmenden Verbindungsbolzen 1 mittels eines entsprechenden, in die Eingriffe 5 an den Bolzenköpfen 2 einzuführenden Werkzeugs in Öffnungsdrehrichtung (Pfeil 31 in Fig. 7) zu drehen. Zu überwinden sind dabei zum einen die Reibungskräfte, die aufgrund der Verspannung der Bolzenköpfe 2 an dem Schließer 15 wirken und zum anderen der verhältnismäßig große zur Drehsicherung der Verbindungsbolzen 1 ausgeübte Bewegungswiderstand, der sich infolge des Zusammenwirkens der Steuernocken 4 an den Bolzenköpfen 2 und der Führungsflächen 26 an den Einsenkungen 24 des Schließers 15 ergibt. Mit der Bewegung der Steuernocken 4 entlang den Führungsflächen 26 verbunden ist ein geringfügiger axialer Hub der Verbindungsbolzen 1, der durch den Eingriff der Schenkel 19, 20 der Schenkelfedern 18 in die oberen Rastaufnahmen 10, 12 der Verbindungsbolzen 1 nicht behindert wird, da die genannten oberen Rastaufnahmen 10, 12 in axialer Richtung der Verbindungsbolzen 1 ein gewisses Übermaß gegenüber den Schenkeln 19, 20 besitzen.

Während des Zusammenwirkens von Steuernocken 4 und Führungsflächen 26 bewegen sich die Schenkel 19, 20 der Schenkelfedern 18 in den horizontalen oberen Rastaufnahmen 10, 12 an den Bolzenschäften 3. Mit Beendigung der Wirkung der von den Steuernocken 4 und den Führungsflächen 26 gebildeten Dreh-Hubvorrichtungen haben die Schenkel 19, 20 der Schenkelfedern 18 die Führungsnuten 8, 9 an den Bolzenschäften 3 erreicht. Eine fortgesetzte Drehbewegung der Verbindungsbolzen 1 in Öffnungsdrehrichtung 31 erfordert folglich nur noch eine verhältnismäßig geringe Betätigungskraft. Nachdem sich die Führungsnuten 8, 9 über einen Umfangswinkel von 180° erstrecken, bedarf es zur Überführung der Verbindungsbolzen 1 in die aus den Fign. 4 bis 6 ersichtliche Lösestellung an dem Schließer 15 lediglich einer halben Umdrehung der Verbindungsbolzen 1. Die Verbindungen zwischen dem Schließer 15 und den Treibstangenabschnitten 16, 17 sind dann wieder freigegeben.

## Patentansprüche

1. Beschlaganordnung an Fenstern, Türen oder dergleichen, mit wenigstens zwei Beschlagteilen (15, 16; 15, 17) sowie mit einer Verbindungsvorrichtung zum Verbinden der Beschlagteile (15, 16; 15, 17),
• wobei die Verbindungsvorrichtung einen Verbindungsbolzen (1), wenigstens ein in radialer Richtung des Verbindungsbolzens (1) vorstehendes Rastelement (19, 20), wenigstens eine in radialer Richtung des Verbindungsbolzens (1) offene Rastaufnahme (10, 12) sowie wenigstens eine in axialer Richtung des Verbindungsbolzens (1) wendelartig ansteigende Führungsnut (8, 9) umfasst,
• wobei an der achsparallelen Außenwand des Verbindungsbolzens (1) und an wenigstens einem der Beschlagteile (15, 16; 15, 17) einerseits das oder die Rastelemente (19, 20) und andererseits die in radialer Richtung des Verbindungsbolzens (1) offene(n) Rastaufnahme(n) (10, 12) sowie die in axialer Richtung des Verbindungsbolzens (1) wendelartig ansteigende(n) Führungsnut(en) (8, 9) vorgesehen sind,
• wobei der Verbindungsbolzen (1) in einer Verbindungsstellung an den miteinander zu verbindenden Beschlagteilen (15, 16; 15, 17) abstützbar ist und dabei das oder die Rastelemente(19, 20) in die zugeordnete Rastaufnahme (10, 12) eingerastet sind,
• wobei das oder die Rastelement (19, 20) bei Drehung des in der Verbindungsstellung befindlichen Verbindungsbolzens (1) in einer Öffnungsdrehrichtung (31) um eine Verbindungsbolzenachse (7) in der zugeordneten Führungsnut (8, 9) in Nutlängsrichtung relativ zu der Führungsnut (8, 9) bewegbar geführt sind und der Verbindungsbolzen (1) durch die Relativbewegung von Führungsnut (8, 9) und zugeordnetem Rastelement (19, 20) aus der Verbindungsstellung in axialer Richtung in eine Lösestellung bewegbar ist,
• wobei der Verbindungsbolzen (1) in der Lösestellung in eines der miteinander zu verbindenden Beschlagteile (15, 16; 15, 17) einsteckbar ist,
• wobei bei Lösestellung des Verbindungsbolzens (1) das oder die Rastelemente (19, 20) zur Verrastung des Verbindungsbolzens (1) in der Verbindungsstellung in eine weitere zugeordnete Rastaufnahme (11, 13) eingerastet sind, welche von der Rastaufnahme (10, 12) zur Verrastung des Verbindungsbolzens (1) in der Verbindungsstellung in axialer Richtung des Verbindungsbolzens (1) beabstandet ist und
• wobei der Verbindungsbolzen (1) zur Überführung aus der Löse- in die Verbindungsstellung in axialer Richtung in das andere der Beschlagteile (15, 16; 15, 17) einsteckbar ist.

2. Beschlaganordnung nach Anspruch 1, **dadurch gekennzeichnet, dass** wenigstens eine Führungsnut (8, 9) von einer Rastaufnahme (10, 12) ausgeht und dass weinigstens ein Rastelement (19, 20) sowohl bei in der Verbindungsstellung befindlichem Verbindungsbolzen (1) in die zugeordnete Rastaufnahme (10, 12) eingerastet ist als auch bei Drehung des Verhindungobolzens (1) in Öffnungsdrehrichtung (31) in der von der Rastaufnahme (10, 12) ausgehenden Führungsnut (8, 9) geführt ist.

3. Beschlaganordnung nach einem der vorhergehenden Ansprüche, **dadurch gekennzeichnet, dass** eine Rastaufnahme (10, 12) zur Verrastung des Verbindungsbolzens (1) in der Verbindungsstellung und eine Rastaufnahme (11, 13) zur Verrastung des Verbindungsbolzens (1) in der Lösestellung an den einander entgegengesetzten Längsenden ein und derselben Führungsnut (8, 9) angeordnet sind.

4. Beschlaganordnung nach einem der vorhergehenden Ansprüche, **dadurch gekennzeichnet, dass** die Rastaufnahme (n) (10, 12) zur Verrastung des Verbindungsbolzens (1) in der verbindungsstellung, die Rastaufnahme(n) (11, 13) zur Verrastung des Verbindungsbolzens (1) in der Lösestellung und die Führungsnut(en) (8, 9) an dem Verbindungsbolzen (1) und dass das oder die zugeordneten Rastelemente (19, 20) an wenigstens einem der Beschlagteile (15, 16; 15, 17) vorgesehen sind.

5. Beschlaganordnung nach einem der vorhergehenden Ansprüche, **dadurch gekennzeichnet, dass** wenigstens eine Rastaufnahme (11, 13) zur Verrastung des Verbindungsbolzens (1) in einer Lösestellung an der einer Rastaufnahme (10, 12) zur Verrastung des Verbindungsbolzens (1) in der Verbindungsstellung zugewandten Seite durch eine in axialerRichtung des Verbindungsbolzens (1) geneigte Schräge (33) begrenzt ist, an welcher das Rastelement (19, 20) bei axialer Bewegung des Verbindungsbolzens (1) aus einer Löse- in die Verbindungsstellung entlanggleitet unter Verlassen der Rastaufnahme (11, 13) zur Verrastung des Verbindungsbolzens (1) in der Lösestellung.

6. Beschlaganordnung nach einem der vorhergehenden Ansprüche, **dadurch gekennzeichnet, dass** wenigstens eine Rastaufnahme (10, 12) zur Verrastung des Verbindungsbolzens (1) in der Verbindungsstellung in axialer Richtung des Verbindungsbolzens (1) eine im Wesentlichen in radialer Richtung des Verbindungsbolzens (1) verlaufende Begrenzung (34) aufweist, welche im Zusammenwirken mit wenigstens einem zugeordneten Rastelement (19, 20) den in der Verbindungsstellung befindlichen verbindungsbolzen (1) gegen axiale Bewegung aus der Verbindungs- in eine Lösestellung abstützt.

7. Beschlaganordnung nach einem der vorhergehenden Ansprüche, **dadurch gekennzeichnet, dass** sich die Führungsnut oder Führungsnuten (8, 9) über einen Umfangswinkel von 180° erstrecken.

8. Beschlaganordnung nach einem der vorhergehenden Ansprüche, **dadurch gekennzeichnet, dass** zwei Rastelemente (19, 20) vorgesehen sind, die sich diametral gegenüberliegen und dienen jeweils wenigstens eine Rastaufnahme (10, 13 ; 11, 12) zugeordnet ist.

9. Beschlaganordnung nach Anspruch 8, **dadurch gekennzeichnet, dass** die beiden Rastelemente (19, 20) von einander gegenüberliegenden Schenkeln einer im Wesentlichen U-förmigen Schenkelfeder (18) ausgebildet sind.

10. Beschlaganordnung nach einem der vorhergehenden Ansprüche, **dadurch gekennzeichnet, dass** der eine Lösestellung an einem der miteinander zu verbindenden Beschlagteile (15, 16; 15, 17) einnehmende Verbindungsbolzen (1) an diesem Beschlagteil (15) in axialer Richtung über wenigstens ein Axialsicherungselement (14) abgestützt ist, welches durch die erstmalige axiale Bewegung des Verbindungsbolzens (1) aus der Löse- in die Verbindungsstellung abscherbar ist.

11. Beschlaganordnung nach einem der vorhergehenden Ansprüche, **dadurch gekennzeichnet, dass** der in der Verbindungsstellung befindliche Verbindungsbolzen (1) an wenigstens einem der Beschlagteile (15, 16; 15, 17) über eine lösbare Drehsicherung gegen Drehen in Öffnungsdrehrichtung (31) gehalten ist.

12. Beschlaganordnung nach einem der vorhergehenden Ansprüche, **dadurch gekennzeichnet, dass** an dem Verbindungsbolzen (1) und an dem oder den Beschlagteilen (15) als Drehsicherungselemente einerseits wenigstens eine in Öffnungsdrehrichtung (31) des Verbindungsbolzens (1) ansteigende Führungsfläche (26) und andererseits wenigstens ein Steuernocken (4) vorgesehen ist und dass sich der Steuernocken (4) und die Führungsfläche (26) bei Drehung des Verbindungsbolzens (1) in Öffnungsdrehrichtung (31) unter axialer Bewegung des Verbindungsbolzens (1) in Richtung auf eine Lösestellung relativ zueinander bewegen, wobei die Länge der Führungsfläche (26) in Öffnungsdrehrichtung (31) des Verbindungsbolzens (1) derart gewählt ist, dass bei Drehung des Verbindungsbolzens (1) in öffnungsdrehrichtung (31) wenigstens ein Rastelement (19, 20) in die zugeordnete wendelartig ansteigende Führungsnut (8, 9) eingetreten ist, sobald der Kontakt von Führungsfläche (26) und Steuernocken (4) beendet ist und wobei der bei der Drehung des Verbindungsbolzens (1) in Öffnungsdrehrichtung (31) infolge des Zusammenwirkens von Führungsfläche (26) und Steuernocken (4) wirkende Bewegungswiderstand größer ist als der Bewegungswiderstand bei der Relativbewegung von Rastelement (19, 20) und Führungsnut (8, 9).

13. Beschlaganordnung nach einem der vorhergehenden Ansprüche, **dadurch gekennzeichnet, dass** der Verbindungsbolzen (1) einen Bolzenschaft (3) sowie einen bezüglich der Achse (7) des Bolzenschaftes (3) asymmetrischen Bolzenkopf (2) aufweist, dass an einem des Beschlagteile (15,16; 15,17) ein Bolzendurchtrittskanal (23) für den Bolzenschaft (3) und eine langlochartige Aüssparung (22) für den Bolzenkopf (2) vorgesehen sind, dass bei in der Verbindungsstellung befindlichem Verbindungsbolzen (1) der Bolzenkopf (2) in axialer Richtung in die langlochartige Aussparung (22) an einem der Beschlagteile (15, 16; 15, 17) eintaucht und der Bolzenschaft (3) an diesem Beschlagteile (15) in dem Bolzendurchtrittskanal (23) aufgenommen ist, dass der Verbindungsbolzen (1) in der Verbindungsstellung radial in Richtung der kürzeren Erstreckung der langlochartigen Ausnehmung (22) einerseits über den Bolzenschaft (3) an der Wand des Bolzendurchtrittskanals (23) und andererseits über den Bolzenkopf (2) an der Wand der langlochartigen Ausnehmung (22) abgestützt und **dadurch** zwischen der Wand des Bolzendurchtrittskanals (23) und der Wand der langlochartigen Ausnehmung (22) verspannt und in Öffnungudrahrichtung (31) lösbar klemmend gehalten ist und dass der Verbindungsbolzen (1) aus der Verbindungsstellung unter Überwindung der Klemmkraft in Öffnungsdrehrichtung (31) in Richtung auf die längere Erstreckung der langlochartigen Aufnahme (22) drehbar ist und **dadurch** die Verspannung des Verbindungsbolzens (1) zwischen der Wand des Bolzendurchtrittskanals (23) und der Wand der langlochartigen Ausnehmung (22) aufgehoben wird.

## Claims

1. Fitting arrangement for windows, doors or the like, said fitting arrangement having at least two fitting members (15, 16; 15, 17) and a connecting device for connecting the fitting members (15, 16; 15, 17),
• wherein the connecting device comprises a connecting bolt (1), at least one locking element (19, 20) that protrudes in the radial direction of the connecting bolt (1), at least one locking accommodating means (10, 12) that is open in the radial direction of the connecting bolt (1) and at least one guide groove (8, 9) that ascends in the manner of a helix in the axial direction of the connecting bolt,
• wherein, on the one side, the locking element or elements (19, 20) and, on the other side, the locking accommodating means (10, 12) that is or are open in the radial direction of the connecting bolt (1) and the guide groove or grooves (8, 9) ascending in the axial direction of the connecting bolt (1) in the manner of a helix, are provided at the axially-parallel outside wall of the connecting bolt (1) and on at least one of the fitting members (15, 16; 15, 17),
• wherein the connecting bolt (1) is supportable in a connecting position on the fitting members (15, 16; 15, 17) that are to be connected together and, at the same time, the locking element or elements (19, 20) are locked into the associated locking accommodating means (10, 12),
• wherein, when the connecting bolt (1) located in the connecting position is rotated in an opening direction of rotation (31) about a connecting bolt axis (7), the locking element or elements (19, 20) are guided so as to be moveable in the associated guide groove (8, 9) in the longitudinal direction of the groove relative to the guide groove (8, 9) and, through the relative movement of guide groove (8, 9) and associated locking element (19, 20), the connecting bolt (1) is moveable in the axial direction out of the connecting position into a release position,
• wherein the connecting bolt (1) in the release position can be inserted into one of the fitting members (15, 16; 15, 17) to be connected together,
• wherein, with the connecting bolt (1) in the release position, for locking the connecting bolt (1) in the connecting position, the locking element or elements (19, 20) are locked into a further associated locking accommodating means (11, 13), which is at a spacing in the axial direction of the connecting bolt (1) from the locking accommodating means (10, 12) for locking the connecting bolt (1) in the connecting position,
• wherein for transferring from the release position to the connecting position, the connecting bolt (1) is insertable in the axial direction into the other fitting member of the fitting members (15, 16; 15, 17).

2. Fitting arrangement according to Claim 1, **characterized in that** at least one guide groove (8, 9) extends from a locking accommodating means (10, 12) and **in that** at least one locking element (19, 20), with the locking bolt (1) in the connecting position, is locked into the associated locking accommodating means (10, 12) and, with the connecting bolt (1) rotated in the opening direction of rotation (31), is guided in the guide groove (8, 9) that extends from the locking accommodating means (10, 12).

3. Fitting arrangement according to one of the preceding claims, **characterized in that** a locking accommodating means (10, 12) for locking the connecting bolt (1) in the connecting position and a locking accommodating means (11, 13) for locking the connecting bolt (1) in the release position are located at the oppositely situated longitudinal ends of one and same guide groove (8, 9).

4. Fitting arrangement according to one of the preceding claims, **characterized in that** the locking accommodating means (10, 12) for locking the connecting bolt (1) in the connecting position, the locking accommodating means (11, 13) for locking the connecting bolt (1) in the release position and the guide groove(s) (8, 9) are provided on the connecting bolt (1) and **in that** the associated locking element or elements (19, 20) are provided on at least one of the fitting members (15, 16; 15, 17).

5. Fitting arrangement according to one of the preceding claims, **characterized in that** at least one locking accommodating means (11, 13) for locking the connecting bolt (1) in a release position is defined on the side facing a locking accommodating means (10, 12) for locking the connecting bolt (1) in the connecting position by means of an inclination (33) that is inclined in the axial direction of the connecting bolt (1), along which inclination the locking element (19, 20) slides when the connecting bolt (1) is moved axially out of a release position into the connecting position leaving the locking accommodating means (11, 13) for locking the connecting bolt (1) in the release position.

6. Fitting arrangement according to one of the preceding claims, **characterized in that** at least one locking accommodating means (10, 12) for locking the connecting bolt (1) in the connecting position has, in the axial direction of the connecting bolt (1), a defining means (34) that extends substantially in the axial direction of the connecting bolt (1), said defining means, interacting with at least one associated locking element (19, 20), supporting the connecting bolt (1) located in the connecting position against axial movement out of the connecting position into a release position.

7. Fitting arrangement according to one of the preceding claims, **characterized in that** the guide groove or guide grooves (8, 9) extend over a circumferential angle of 180°.

8. Fitting arrangement according to one of the preceding claims, **characterized in that** two locking elements (19, 20) are provided situated diametrically opposite each other and associated with each of said locking elements is at least one locking accommodating means (10, 13; 11, 12).

9. Fitting arrangement according to Claim 8, **characterized in that** the two locking elements (19, 20) are realized by oppositely situated portions of a substantially U-shaped leg spring (18).

10. Fitting arrangement according to one of the preceding claims, **characterized in that** the connecting bolt (1), assuming a release position at one of the fitting members (15, 16; 15, 17) to be connected together, is supported at said fitting member (15) in the axial direction via at least one axially retaining element (14), which is able to shear off through the first-time axial movement of the connecting bolt (1) out of the release position into the connecting position.

11. Fitting arrangement according to one of the preceding claims, **characterized in that** the connecting bolt (1) located in the connecting position on at least one of the fitting members (15, 16; 15, 17) is retained by means of a detachable anti-rotation device against rotation in the opening direction of rotation (31).

12. Fitting arrangement according to one of the preceding claims, **characterized in that**, on one side, at least one guide face (26), ascending in the opening direction of rotation (31) of the connecting bolt (1), is provided on the connecting bolt (1) and on the fitting member or members (15) in the form of an anti-rotation element and, on the other side, a least one control cam (4) is provided in the form of an anti-rotation element, and **in that**, with the connecting bolt (1) rotating in the opening direction of rotation (31) and with the axial movement of the connecting bolt (1) in the direction of a release position, the control cam (4) and the guide face (26) move towards each other in a relative manner, wherein the length of the guide face (26) in the opening direction of rotation (31) of the connecting bolt (1) is selected such that, with the connecting bolt (1) rotated into the opening direction of rotation (31), at least one locking element (19, 20) enters the associated helically ascending guide groove (8, 9) as soon as the contact between guide face (26) and control cam (4) is terminated and wherein the movement resistance effective with the connecting bolt (1) rotating into the opening direction of rotation (31) on account of the interaction between guide face (26) and control cam (4) is greater that the movement resistance during the relative movement between locking element (19, 20) and guide grove (8, 9).

13. Fitting arrangement according to one of the preceding claims, **characterized in that** the connecting bolt (1) has a bolt shaft (3) and a bolt head (2) that is asymmetric with reference to the axis (7) of the bolt shaft (3), **in that** on one of the fitting members (15, 16; 15, 17) a bolt-through-channel (23) is provided for the bolt shaft (3) und an elongate-hole-like recess (22) is provided for the bolt head (2), **in that**, with the connecting bolt (1) in the connecting position, the bolt head (2), in the axial direction, dips into the elongate-hole-like recess (22) on one of the fitting members (15, 16; 15, 17) and the bolt shaft (3) on said fitting member (15) is accommodated in the bolt-through-channel (23), **in that** the connecting bolt (1), in the connecting position radially in the direction of the shorter extension of the elongate-hole-like recess (22), is supported on the one side by means of the bolt shaft (3) against the wall of the bolt-through-channel (23) and on the other side by means of the bolt head (2) against the wall of the elongate-hole recess (22) and is thereby tensioned between the wall of the bolt-through-channel (23) and the wall of the elongate-hole-like recess (22) and is held in a clamped detachable manner in the opening direction of rotation (31) and **in that** the connecting bolt (1) is rotatable out of the connecting position, by overcoming the clamping force in the opening direction of rotation (31), in the direction of the longer extension of the elongate-hole-like recess (22), thereby eliminating the clamping of the connecting bolt (1) between the bolt through passage (23) and the wall of the elongate-hole-like recess (22).

## Revendications

1. Ensemble de ferrure pour des fenêtres, portes ou analogues, comportant au moins deux pièces de ferrure (15,16 ; 15,17) ainsi qu'un dispositif de liaison pour relier les pièces de ferrure (15,16 ; 15,17), dans lequel
- le dispositif de liaison comporte un goujon de liaison (1), au moins un élément d'enclipage (19, 20) en saillie dans la direction radiale du goujon de liaison (1), au moins un logement d'enclipage (10, 12) ouvert dans la direction radiale du goujon de liaison (1) ainsi qu'au moins une rainure de guidage (8, 9) remontant en hélice dans la direction axiale du goujon de liaison (1),
- la paroi extérieure parallèle à l'axe du goujon de liaison (1) et sur au moins l'une des pièces de ferrure (15, 16 ; 15, 17) il y a d'une part le ou les éléments d'enclipage (19, 20) et d'autre part le ou les logements d'enclipage (10, 12) ouverts dans la direction radiale du goujon de liaison (1) ainsi qu'une ou plusieurs rainures de guidage (8, 9) remontant en hélice dans la direction axiale du goujon de liaison (1),
- le goujon de liaison (1) étant appuyé dans une position de liaison contre les pièces de ferrure (15, 16 ; 15, 17) à relier les unes aux autres pour ainsi accrocher le ou les éléments d'enclipage (19, 20) dans le logement d'enclipage (10, 12) correspondant,
- lors de la rotation du goujon de liaison (1) qui se trouve en position de liaison, le ou les éléments d'enclipage (19, 20) sont déplacés de manière guidée dans le sens de rotation d'ouverture (31) autour de l'axe (7) du goujon de liaison dans la rainure de guidage (8, 9) associée, dans la direction longitudinale de la rainure par rapport à la rainure de guidage (8, 9) et le mouvement relatif de la rainure de guidage (8, 9) et de l'élément d'enclipage correspondant (19, 20) fait que le goujon de liaison est déplacé de sa position de liaison dans sa position de libération, dans la direction axiale,
- en position de libération le goujon de liaison (1) s'engage dans l'une des pièces de ferrure (15, 16 ; 15, 17) à relier l'une à l'autre,
- en position de libération du goujon de liaison (1), le ou les éléments d'enclipage (19, 20) s'accrochent dans un autre logement d'enclipage associé (11, 13) pour accrocher le goujon de liaison (1) en position de liaison, ce logement d'enclipage étant écarté du logement d'enclipage (10, 12) servant à l'enclipage du goujon de liaison (1) dans la position de liaison, dans la direction axiale du goujon de liaison (1), et
- pour passer de sa position de libération à sa position de liaison, le goujon de liaison (1) s'engage dans la direction axiale dans l'autre pièce de ferrure (15, 16 ; 15, 17).

2. Ensemble de ferrure selon la revendication 1,
**caractérisé en ce qu'**
au moins une rainure de guidage (8, 9) est issue d'un logement d'enclipage (10, 12), et
au moins un élément d'enclipage (19, 20) à la fois lorsque le goujon de liaison (1) se trouve en position de liaison, s'accroche dans le logement d'enclipage associé (10, 12) et lors de la rotation du goujon de liaison (1) dans le sens de rotation d'ouverture (31), il est guidé dans la rainure de guidage (8, 9) issue du logement d'enclipage (10, 12).

3. Ensemble de ferrure selon l'une des revendications précédentes,
**caractérisé en ce qu'**
un logement d'enclipage (10, 12) pour accrocher le goujon de liaison (1) en position de liaison et un logement d'enclipage (11, 13) pour accrocher le goujon de liaison (1) en position de libération sont prévus aux extrémités longitudinales opposées de la même rainure de guidage (8, 9).

4. Ensemble de ferrure selon l'une des revendications précédentes,
**caractérisé en ce que**
le ou les logements d'enclipage (10, 12) pour accrocher le goujon de liaison (1) en position de liaison, le ou les logements d'enclipage (11, 13) pour accrocher le goujon de liaison en position de libération et la ou les rainures de guidage (8, 9) du goujon de liaison (1), et
le ou les éléments d'enclipage (19, 20) associés sont prévus sur au moins l'une des pièces de ferrure (15, 16 ; 15, 17).

5. Ensemble de ferrure selon l'une des revendications précédentes,
**caractérisé en ce qu'**
au moins un logement d'enclipage (11, 13) pour accrocher le goujon de liaison (1) dans une position de libération est délimité sur le côté tourné vers un logement d'enclipage (10, 12) pour accrocher le goujon de liaison (1) dans la position de liaison par une rampe (33) inclinée dans la direction axiale du goujon de liaison (1), sur laquelle glisse l'élément d'enclipage (19, 20) lors du mouvement axial du goujon de liaison (1) sortant de sa position de libération pour passer dans sa position de liaison en quittant le logement d'enclipage (11, 13) pour accrocher le goujon de liaison (1) en position de libération.

6. Ensemble de ferrure selon l'une des revendications précédentes,
**caractérisé en ce qu'**
au moins un logement d'enclipage (10, 12) comporte une limitation (34) s'étendant essentiellement dans la direction radiale du goujon de liaison (1) pour accrocher le goujon de liaison (1) en position de liaison dans la direction axiale du goujon de liaison (1), cette limitation coopérant avec au moins un élément d'enclipage (19, 20) associé pour appuyer le goujon de liaison (1) qui se trouve en position de liaison contre le mouvement axial pour sortir de sa position de liaison et passer dans sa position de libération.

7. Ensemble de ferrure selon l'une des revendications précédentes,
**caractérisé en ce que**
la rainure de guidage ou les rainures de guidage (8, 9) s'étendent sur un angle périphérique de 180°.

8. Ensemble de ferrure selon l'une des revendications précédentes,
**caractérisé par**
deux éléments d'enclipage (19, 20) qui se font diamétralement face et auxquels sont associés respectivement au moins un logement d'enclipage (10, 13 ; 11, 12).

9. Ensemble de ferrure selon la revendication 8,
**caractérisé en ce que**
les deux éléments d'enclipage (19, 20) sont réalisés par les branches opposées d'un ressort à branches (18) principalement en forme de U.

10. Ensemble de ferrure selon l'une des revendications précédentes,
**caractérisé en ce que**
le goujon de liaison (1) qui prend une position de libération sur l'une des pièces de ferrure (15, 16 ; 15, 17) à relier, est appuyé contre cette pièce de ferrure (15) dans la direction axiale par l'intermédiaire d'au moins un élément de fixation axiale (14) qui sera cisaillé par le premier mouvement axial du goujon de liaison (1) passant de sa position de libération dans sa position de liaison.

11. Ensemble de ferrure selon l'une des revendications précédentes,
**caractérisé en ce que**
le goujon de liaison (1) qui se trouve en position de liaison est bloqué en rotation dans le sens de rotation d'ouverture (31), sur au moins l'une des pièces de ferrure (15, 16 ; 15, 17) par un moyen amovible de blocage en rotation.

12. Ensemble de ferrure selon l'une des revendications précédentes,
**caractérisé en ce que**
le goujon de liaison (1) et la ou les pièces de ferrure (15) comportent comme élément de blocage en rotation, d'une part au moins une surface de guidage (26) montant dans le sens de rotation d'ouverture (31) du goujon de liaison (1) et d'autre part au moins une came de commande (4), et
- la came de commande (4) et la surface de guidage (26), lors de la rotation du goujon de liaison (1) dans le sens de rotation d'ouverture (31), sous l'effet du mouvement axial du goujon de liaison (1) sont déplacés l'un par rapport à l'autre en direction de la position de libération,
- la longueur de la surface de guidage (26) dans le sens de rotation d'ouverture (31) du goujon de liaison (1) étant choisie pour que la rotation du goujon de liaison (1) dans le sens de rotation d'ouverture (31), au moins un élément d'enclipage (19, 20) pénètre dans la rainure de guidage (8, 9) qui remonte en hélice et lui est associé dès que s'arrête le contact entre la surface de guidage (26) et la came de commande (4), et
- la résistance au mouvement qui agit lors de la rotation du goujon de liaison (1) dans le sens de rotation d'ouverture (31), sous l'effet de la coopération entre la surface de guidage (26) et la came de commande (4), est supérieure à la résistance au mouvement engendré par le mouvement relatif de l'élément d'enclipage (19, 20) et de la rainure de guidage (8, 9).

13. Ensemble de ferrure selon l'une des revendications précédentes,
**caractérisé en ce que**
le goujon de liaison (1) comporte une tige (3) ainsi qu'une tête de goujon (2) asymétrique par rapport à l'axe (7) de la tige (3) du goujon,
l'une des pièces de ferrure (15, 16 ; 15, 17) comporte un canal de passage de goujon (23) pour la tige (3) du goujon et un évidement (22) en forme de trou oblong pour la tête du goujon,
lorsque le goujon de liaison (1) est en position de liaison, la tête du goujon pénètre dans la direction axiale dans l'évidement (22) en forme de trou oblong de l'une des pièces de ferrure (15, 16 ; 15, 17) et la tige (3) du goujon est reçue dans le canal de passage de goujon (23) de cette pièce de ferrure (15),
le goujon de liaison (1) en position de liaison, s'appuie radialement en direction de la plus courte extension de l'évidement en forme de trou oblong (22) d'une part par l'intermédiaire de la tige de goujon (3) contre la paroi du canal de passage de goujon (23) et d'autre part par l'intermédiaire de la tête du goujon (2) contre la paroi de la cavité (22) en forme de trou oblong et assure ainsi le serrage entre la paroi du canal de passage de goujon (23) et la paroi de l'évidement (22) en forme de trou oblong et il est tenu de manière serrée, amovible, dans le sens de rotation d'ouverture (31), et
le goujon de liaison (1) peut tourner de sa position de liaison en dépassant la force de serrage, dans le sens de rotation de l'ouverture (31) en direction de la plus grande extension de l'évidement en forme de trou oblong (22) et ainsi neutraliser le serrage du goujon de liaison (1) entre la paroi du canal de passage de goujon (23) et la paroi de la cavité (22) en forme de trou oblong.
